Europäisches Patentamt

European Patent Office

Office européen des brevets

(19)

(11) Numéro de publication : **0 029 795**
**B1**

(12) **FASCICULE DE BREVET EUROPÉEN**

(45) Date de publication du fascicule du brevet :
28.12.83

(51) Int. Cl.³ : **C 10 J 3/26**, C 10 B 53/02

(21) Numéro de dépôt : 80430022.6

(22) Date de dépôt : 07.11.80

(54) Gazéificateur de combustibles solides à lit fixe et à tirage inversé.

(30) Priorité : 16.11.79 FR 7928661

(43) Date de publication de la demande :
03.06.81 Bulletin 81/22

(45) Mention de la délivrance du brevet :
28.12.83 Bulletin 83/52

(84) Etats contractants désignés :
DE FR GB IT

(56) Documents cités :
BE-A-  457 257
BE-A-  457 333
CH-A-  239 720
CH-A-  350 404
FR-A-  732 947
FR-A-  846 148
FR-A-  889 896
FR-A- 2 422 712

(73) Titulaire : **ENTREPRISE GENERALE DE CHAUFFAGE
INDUSTRIEL PILLARD. Société anonyme dite:**
**13, rue Raymond Teissère
F-13008 Marseille (FR)**

(72) Inventeur : **Pillard, Jean-Claude
331, Avenue du Prado
F-13008 Marseille (FR)**

(74) Mandataire : **Azais, Henri et al
c/o CABINET BEAU DE LOMENIE 14, rue Raphael
F-13008 Marseille (FR)**

EP 0 029 795 B1

Jouve, 18, rue St-Denis, 75001 Paris, France

## Gazéificateur de combustibles solides à lit fixe et à tirage inversé

La présente invention a pour objet des gazéificateurs de combustibles solides à lit fixe et à tirage inversé.

Le secteur technique de l'invention est celui de la construction des appareils de distillation de combustibles solides dits gazéificateurs ou gazogènes destinés à décomposer les combustibles par pyrolyse et oxydation modérée pour en extraire des gaz combustibles (CO, $H_2$ ou hydrocarbures).

Les appareils selon l'invention peuvent être utilisés en même temps comme carbonisateurs de bois ou d'autres déchets végétaux destinés à produire non seulement des gaz, mais également du charbon de bois que l'on extrait à la base de l'appareil.

Les appareils gazéificateurs selon l'invention sont destinés à gazéifier toutes sortes de combustibles solides divisés ayant une granulométrie telle que le lit de combustibles soit perméable aux gaz, notamment le bois, la houille et autres charbons minéraux, le charbon de bois et tous les déchets végétaux, tels que par exemple des coques de noix ou de café, des graines ou des enveloppes de céréales etc..., cette énumération n'ayant aucun caractère limitatif.

Les appareils gazéificateurs selon l'invention sont des gazéificateurs verticaux du type connu à lit fixe et à tirage inversé, qui comportent une couche en combustion ou lit d'épaisseur constante à travers laquelle les gaz s'écoulent du haut vers le bas.

L'objectif de la présente invention est de procurer des gazéificateurs perfectionnés qui remédient aux difficultés inhérentes à ces appareils. Une de ces difficultés est d'obtenir une descente régulière des matériaux combustibles solides et notamment d'éviter la formation de cheminements préférentiels des gaz à travers le lit qui risqueraient de provoquer de fortes différences de température. Une autre difficulté est d'injecter l'air de combustion de façon homogène dans le lit pour que la zone à haute température soit homogène. Une autre difficulté dans les appareils de gazéification de produits végétaux ou de charbon minéral est de permettre que les goudrons qui se dégagent lors du préchauffage du combustible et pendant la phase de pyrolyse, traversent la zone de combustion à haute température pour être craqués et transformés en produits gazeux, moins gênants.

Ces différents objectifs sont contradictoires et ont donné lieu à des réalisations qui favorisent l'un des objectifs au détriment des autres.

— Le brevet CH-A-350.404 (E. MEILI) décrit un gazéificateur à axe vertical comportant un serpentin qui tapisse la paroi intérieure de la cuve de combustion et dont l'extrémité supérieure porte des buses de sortie d'air qui pénètrent dans le lit de matière en combustion et qui constituent un obstacle au bon écoulement par gravité des matériaux.

— Le document FR-A-2.422.712 (Moteurs Duvant) décrit un gazéificateur dont la chambre de combustion comporte un collecteur annulaire périphérique alimentant des injecteurs d'air de combustion qui est préchauffé dans des échangeurs cylindriques verticaux séparés de la cuve du gazéificateur, puis dans des échangeurs tubulaires situés à la base de la chambre de combustion.

— Les documents BE-A-457.333 et BE-A-457.257 (Forschungsanstalt Prof. JUNKERS) décrivent tous deux des gazéificateurs verticaux munis à la base d'une plaque d'obturation qui est déplaçable manuellement en rotation et verticalement et qui comporte des palettes radiales et une ouverture centrale d'évacuation des cendres.

Un gazéificateur de combustibles solides selon l'invention est du type à lit fixe et à tirage inversé comportant une enceinte cylindrique de séchage et de pyrolyse à axe vertical qui est équipée d'un sas de changement et dont l'extrémité inférieure est ouverte et communique avec une chambre de combustion coaxiale dont la paroi cylindrique est composée d'une virole en tôle d'acier qui est tapissée intérieurement par un ou plusieurs serpentins dont les extrémités inférieures sont connectées sur des arrivées d'air de combustion.

Les objectifs de l'invention sont atteints au moyen d'un gazéificateur dans lequel les extrémités supérieures des serpentins sont connectées sur un collecteur annulaire qui est disposé à la jonction entre l'enceinte de séchage et la chambre de combustion et qui comporte des sorties d'air inclinées vers l'axe et vers le bas et de plus, l'extrémité inférieure de la chambre de combustion comporte une plaque de fond fixe et une sole circulaire tournante qui porte sur sa face supérieure un noyau tournant axial formant une cheminée verticale coaxiale à la chambre de combustion et ladite cheminée est composée de deux tubes coaxiaux qui délimitent entre eux un espace annulaire dans lequel circule l'air de combustion.

Selon un mode de réalisation préférentiel, la sole tournante est entraînée en rotation par un motoréducteur et elle porte sur sa face inférieure des ailettes de raidissement qui poussent les cendres tombant de la sole vers l'ouverture d'un sas à cendres placé au-dessus d'un cendrier et l'extrémité inférieure de la chambre de combustion comporte une ouverture périphérique qui sépare l'extrémité inférieure de la chambre de ladite sole et qui sert à la sortie des gaz et à l'évacuation des cendres.

Le tube inférieur de la cheminée axiale comporte des barres en métal réfractaire qui s'étendent à travers ledit espace annulaire où ils sont refroidis par l'air de combustion et qui traversent le tube externe pour pénétrer dans le lit en combustion, de telle sorte qu'ils améliorent la descente des matériaux.

Un gazéificateur selon l'invention comporte avantageusement une première enveloppe cylindrique qui entoure coaxialement la chambre de combustion et la partie inférieure de ladite enceinte de séchage et de pyrolyse en délimitant avec celles-ci un espace annulaire dont l'extrémité inférieure communique avec l'ouverture périphérique de l'extrémité inférieure de la chambre de combustion et qui comporte, dans sa partie supérieure, un conduit de sortie des gaz combustibles.

De préférence, un gazéificateur selon l'invention comporte une deuxième enveloppe cylindrique externe qui entoure coaxialement la première enveloppe en délimitant avec celle-ci un espace annulaire qui est ouvert à la partie supérieure et qui comporte, dans la partie inférieure, un conduit de sortie qui est connecté, d'une part, sur les arrivées d'air dudit serpentin et, d'autre part, sur l'extrémité inférieure dudit arbre creux et ledit espace annulaire fait partie d'un circuit de préchauffage de l'air de combustion qui est équipé éventuellement d'un ventilateur.

L'invention a pour résultat de nouveaux gazéificateurs de combustibles solides, ou gazogènes, permettant de transformer les combustibles solides en gaz combustibles par pyrolyse, craquage des... goudrons et oxydation modérée. Selon le degré d'oxydation, on recueille à la partie inférieure de l'appareil soit des cendres, si la combustion est totale, soit du charbon de bois ou charbon végétal, si l'oxydation est plus modérée et est conduite à température plus basse et dans ce dernier cas, l'appareil fonctionne en carbonisateur.

Les avantages des appareils gazéificateurs selon l'invention sont les suivants :
— l'air de combustion est injecté de façon homogène dans le lit en combustion ;
— la paroi de la chambre de combustion à haute température est bien refroidie par le serpentin qui la tapisse et par les gaz qui circulent au contact de l'autre face. Elle ne présente aucun risque de contact avec les cendres chaudes et corrosives et se dilate facilement et librement;
— l'air de combustion est fortement préchauffé, ce qui permet d'obtenir une température de combustion élevée, même avec des combustibles solides ayant un pouvoir calorifique relativement bas et d'obtenir à la sortie de l'appareil des gaz combustibles plus riches ;
— le lit de matière solide descend librement par gravité car il n'y a aucun rétreint ou obstacle. Le mouvement de descente gravitaire est aidé par l'action de la sole tournante et du noyau portant des bras de décolmatage ;
— l'évacuation des cendres par la sole tournante est positive et efficace. Les pertes thermiques sont réduites.

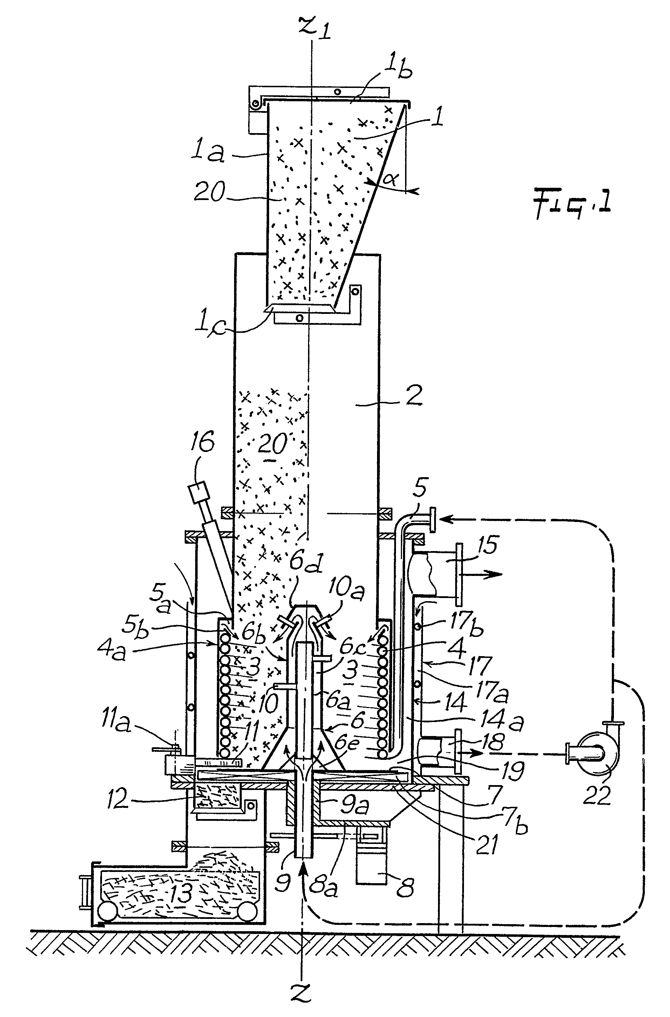

La description suivante se réfère aux dessins annexés. La figure 1 est une coupe axiale verticale d'un appareil gazéificateur selon l'invention.

Il est précisé qu'un appareil gazéificateur selon l'invention peut être utilisé comme carbonisateur, c'est-à-dire pour obtenir une oxydation modérée qui transforme un combustible solide en charbon végétal et en gaz. Il peut également être utilisé comme gazogène pour transformer entièrement un combustible solide en gaz et en cendres. La structure de l'appareil reste la même dans les deux cas. Par contre, le fonctionnement diffère par les températures de réaction et par les débits d'air de combustion.

Un appareil selon l'invention comporte à son extrémité supérieure un sas de chargement étanche 1. Ce cas est délimité, de préférence, par une enveloppe tronconique 1a. Cette enveloppe tronconique est une portion d'un cône développable dont les sections droites sont des cercles et dont les génératrices convergent vers un sommet situé vers le bas et font, avec la verticale, un angle qui varie de zéro à angle maximum α afin de favoriser l'écoulement par gravité des combustibles solides 20, à l'état divisé, qui sont introduits dans le sas. L'extrémité supérieure du sas est fermée par un couvercle de chargement 1b et l'extrémité inférieure est fermée par un obturateur 1c et bien entendu, les obturateurs 1b et 1c ne sont jamais ouverts simultanément.

Le sas de chargement 1 est placé au sommet d'une enceinte 2 en forme de colonne cylindrique à axe vertical z zl. Cette enceinte délimite un volume dans lequel s'effectue de haut en bas le séchage, puis la décomposition par pyrolyse des combustibles 20 à mesure qu'ils descendent par gravité. Pour la clarté du dessin, on n'a représenté des combustibles que sur la moitié gauche de la figure 1.

L'extrémité inférieure de l'enceinte 2 est ouverte et elle communique avec l'intérieur d'une chambre de combustion 3 qui est située au-dessous de l'enceinte 2 et qui est coaxiale avec celle-ci. Les matériaux séchés et pyrolysés s'écoulent par gravité dans la chambre 3 où se produit, soit une combustion modérée conduisant à du charbon de bois ou à tout autre charbon végétal, soit une combustion totale. Dans tous les cas, la chambre de combustion 3 est une zone à haute température, dans laquelle se produit le craquage des goudrons qui se produisent par pyrolyse dans la partie inférieure de la colonne 2.

L'extrémité inférieure de la chambre de combustion est équipée d'une sole tournante 7. Une ouverture périphérique 19 sépare l'extrémité inférieure de la chambre 3 de la sole tournante et cette ouverte 19 sert à la sortie des gaz et à l'évacuation des cendres ou du charbon.

La paroi latérale cylindrique de la chambre de combustion 3 est composée d'une virole en tôle 4a, cylindrique ou légèrement tronconique, d'axe z zl, qui est tapissée intérieurement par un ou plusieurs serpentins 4 composés d'un ou de plusieurs tubes cintrés. Les spires du ou des serpentins 4 peuvent être jointives comme le représente le dessin. Elles peuvent également être non jointives et, dans ce cas, on peut disposer dans l'espace libre entre les spires un béton ou tout autre matériau réfractaire.

L'extrémité supérieure du ou des serpentins est connectée sur un collecteur annulaire 5a, qui est disposé à l'extrémité supérieure de la chambre de combustion, à la jonction de celle-ci et de la colonne 2. Comme on peut le voir sur la figure 1, de préférence, la virole 4a a un diamètre légèrement supérieur au diamètre de la colonne 2 et les serpentins 4 ainsi que le collecteur 5a sont disposés dans la surlargeur.

L'extrémité inférieure du ou des serpentins 4 est connectée sur une ou plusieurs arrivées d'air de combustion préchauffé, par exemple sur une conduite 5. La conduite 5 peut être disposée ailleurs qu'à l'emplacement représenté sur le dessin.

Une partie de l'air nécessaire à la combustion dans la chambre 3 circule à travers le serpentin 4 où il s'échauffe tout en protégeant les parois latérales de la chambre. Le collecteur 5a comporte des sorties d'air inclinées vers l'axe et vers le bas, par exemple des orifices ou une fente annulaire, et un déflecteur conique annulaire 5b, de sorte que l'on obtient à l'extrémité supérieure de la chambre de combustion une distribution périphérique d'air de combustion qui est projeté contre la surface annulaire du talus de combustible qui s'écoule de la colonne 2. Sur la figure, on a représenté par des flèches la direction de l'air de combustion distribué par le collecteur 5a. La sole tournante 7 est constituée par un disque horizontal monté sur un arbre creux 9 qui traverse la sole et qui tourillonne dans un palier 9a. L'arbre 9 est entraîné en rotation par un moteur 8 et par une transmission 8a qui est par exemple une transmission à roues dentées et à chaîne ou toute autre transmission de mouvement équivalente.

L'extrémité inférieure de l'arbre creux 9 est connectée sur une deuxième arrivée d'air de combustion, de telle sorte que l'air de combustion nécessaire pour alimenter la chambre de combustion 3 est répartie entre les arrivées 5 et 9. La répartition de l'air entre les deux circuits est déterminée expérimentalement.

La sole tournante porte sur sa face inférieure des nervures ou ailettes de raidissement radiales 7b qui débordent au-delà de la périphérie de la sole et qui entraînent positivement les cendres qui tombent de la sole vers un sas récepteur 12 d'où elles sont ensuite évacuées vers un cendrier roulant 13. La sole tournante coopère avec un racleur fixe et réglable 11 qui est disposé au-dessus de la sole et contre lequel les cendres viennent buter. Le racleur 11 peut, comme cela est représenté, être monté pivotant autour d'un axe vertical 11a qui permet de le mettre en position de butée ou de l'escamoter.

La sole tournante 7 supporte sur sa face supérieure, un noyau axial tournant 6. Ce noyau d'axe z zl s'étend sensiblement sur toute la hauteur de la chambre de combustion et est entraîné en rotation avec la chambre. Il forme une cheminée verticale dont la base coiffe l'extrémité supérieure de l'arbre creux 9 et reçoit l'air de combustion qui sort de celui-ci.

Selon un mode de réalisation préférentiel, le noyau tournant est composé de deux tubes coaxiaux 6a et 6b qui délimitent entre eux un espace annulaire 6c. La base du tube externe 6b s'élargit pour coiffer l'extrémité supérieure de l'arbre creux 9. La base du tube intérieur 6a est fixée à la sole par des goussets 6e. Le sommet de la cheminée est coiffé par un déflecteur tronconique 6d qui dévie l'air vers le bas. Une partie de l'air de combustion préchauffé entre par l'arbre creux 9, passe dans l'espace annulaire 6c et est injecté obliquement vers le bas dans l'espace annulaire qui est délimité par les matériaux qui s'écoulent le long du déflecteur tronconique et qui viennent s'appuyer contre le noyau central suivant un talus d'écoulement naturel.

Les directions d'écoulement de l'air de combustion sont représentées par des flèches. On voit donc que l'air de combustion est injecté dans le haut de la chambre de combustion en partie au centre de celle-ci et en partie à la périphérie en étant dirigé vers le bas, ce qui permet d'obtenir une zone de combustion à haute température très homogène dans toute la chambre de combustion où s'effectue le craquage des goudrons et la gazéification. Le tube axial 6a porte des barres 10 en métal réfractaire formant des bras ou plots de décolmatage qui s'étendent à travers l'espace annulaire 6c où ils sont refroidis par le courant d'air de combustion. Les bras 10 traversent le tube externe 6d et pénètrent dans la masse du lit en combustion à travers lequel ils sont entraînés en rotation. Des plots de décolmatage 10a sont fixés en oblique dans la partie supérieure et traversent le déflecteur 6d. Les bras de décolmatage 10/10a facilitent la descente par gravité des matériaux en évitant la formation de ponts et de voûtes.

L'appareil gazéificateur comporte, en outre, une première enveloppe cylindrique 14 qui enveloppe coaxialement la chambre de combustion 3 et qui délimite avec la virole externe 4a, un espace annulaire 14a. L'enveloppe 14 entoure également la partie inférieure de la colonne 2. L'extrémité inférieure de l'espace annulaire 14a communique avec l'ouverture périphérique 19 située à la base de la chambre de combustion et reçoit les gaz qui sortent de celle-ci. L'espace annulaire 14a communique également dans sa partie supérieure avec un conduit 15 de sortie des gaz fabriqués. Ainsi les gaz chauds cèdent des calories à la partie inférieure de la colonne 2 dans la zone où s'effectue la pyrolyse du combustible.

La virole cylindrique 14 a un diamètre supérieure à celui qui est parcouru par l'extrémité des ailettes 7b et son extrémité inférieure est soudée sur une plaque de fond 21 au-dessus de laquelle se déplacent les ailettes 7b.

L'appareil comporte un brûleur auxiliaire d'allumage 16 qui est un brûleur de combustibles liquides ou gazeux dont le nez est situé dans le haut de la chambre de combustion. L'appareil comporte encore une deuxième enveloppe cylindrique 17 qui entoure coaxialement la première enveloppe 14 en délimitant avec celle-ci un espace annulaire 17a. Cet espace annulaire est ouvert à l'extrémité supérieure. Il comporte à la partie inférieure un conduit de sortie 18. Le conduit de sortie 18 est connecté par exemple sur l'orifice d'aspiration d'un ventilateur 22 dont le refoulement est connecté, d'une part sur le conduit 5 et, d'autre part, sur l'extrémité de l'arbre creux 9. Les liaisons du ventilateur sont représentées en pointillés sur la figure.

En variante, si le gazogène fonctionne en air aspiré, le conduit 18 est connecté directement au conduit 5 et à l'arbre creux 9 sans passer par un ventilateur. On voit donc que l'air de combustion frais est préchauffé une première fois lors de son passage dans l'espace annulaire 17a et il sert alors à refroidir la paroi externe du gazogène en récupérant des calories.

L'air de combustion est ensuite chauffé par son passage en partie à travers le serpentin 4 et en partie dans la cheminée 6 qui sont au contact direct de la zone de combustion à haute température, de sorte que l'air est injecté dans la partie supérieure de la chambre à une température élevée, ce qui permet d'obtenir une très bonne combustion même de combustibles relativement pauvres, de réduire le débit d'air de combustion et finalement d'obtenir à la sortie 15 un gaz combustible plus riche.

Afin d'augmenter la vitesse de passage de l'air dans l'espace annulaire 17a et d'améliorer ainsi les échanges thermiques, on peut canaliser l'air suivant un trajet hélicoïdal en plaçant dans cet espace un fer plat ou rond enroulé en spirale 17b ou bien plusieurs fers plats cintrés en demi-cercle et disposés horizontalement pour former des chicanes.

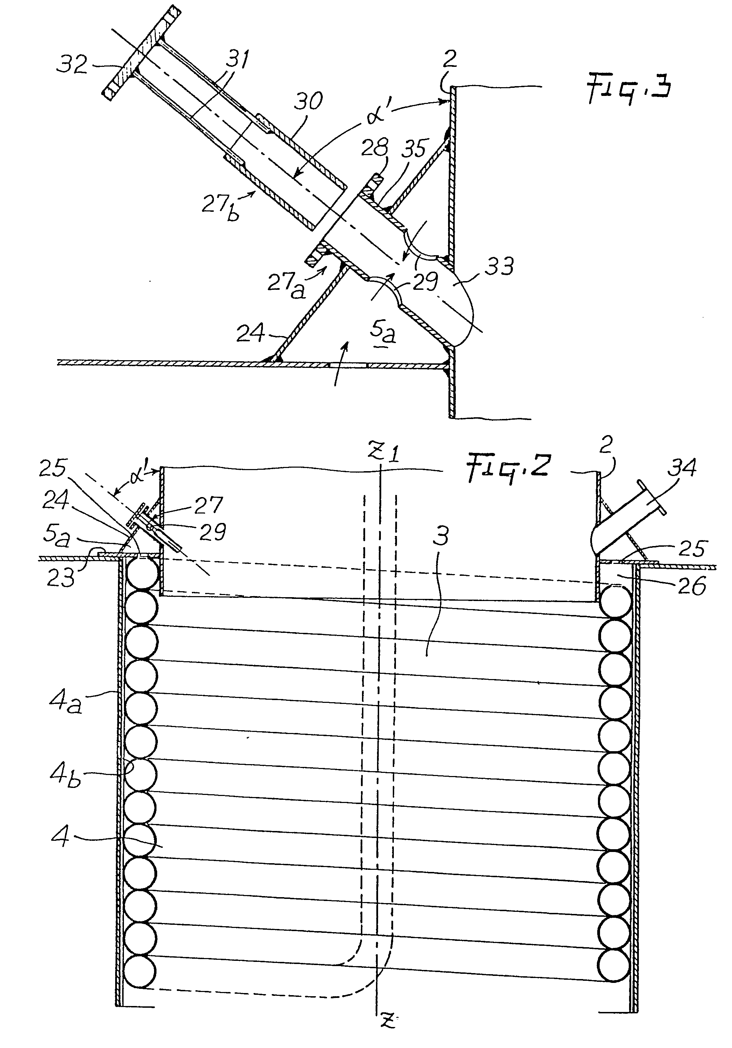

La figure 2 représente une coupe verticale partielle d'une variante de réalisation de la chambre de combustion 3 d'un gazéificateur selon l'invention.

On a représenté sur cette figure la partie inférieure de l'enceinte 2 et la paroi latérale de la chambre de combustion 4a qui est tapissée intérieurement par un ou plusieurs serpentins 4. La paroi 4a peut comporter optionnellement sur sa face interne un revêtement réfractaire ou isolant 4b. On n'a représenté sur ce dessin ni la cheminée interne 6, ni la sole tournante 7, ni les parois situées à l'extérieur de la paroi 4a.

Le gazéificateur selon la figure 2 comporte un collecteur annulaire 5a ayant une section triangulaire qui est délimité par la paroi verticale de l'enceinte 2, par une bride horizontale 23 qui obture l'espace annulaire situé à la fonction entre le bord inférieur de l'enceinte 2 et le bord supérieur de la chambre 3 et par une tôle 24 soudée sur la paroi de l'enceinte 2 et sur la bride 23.

Le collecteur 5a communique par des orifices 25 percés à travers la bride 23 avec le volume annulaire 26 délimité par la spire supérieure du serpentin 4, par la bride 23, par la paroi verticale de l'enceinte 2 et par la paroi 4a. Les extrémités supérieures du ou des serpentins 4 débouchent dans le volume 26.

Le gazéificateur selon la figure 2 comporte des buses 27 qui traversent le collecteur 5a et qui débouchent dans la chambre de combustion, à la périphérie de la jonction entre celle-ci et l'enceinte 2. Ces buses sont inclinées vers le bas et font avec la verticale un angle α' compris entre 20° et un angle légèrement inférieur à 90°.

Ces buses peuvent être démontées en marche pour être nettoyées ou remplacées. Elles ont une longueur qui détermine la pénétration dans le lit de matière qui est choisie en fonction des conditions de marche.

La figure 3 représente une vue éclatée d'une buse 27. Celle-ci est composée de deux parties cylindriques et coaxiales, une partie fixe 27a et une partie amovible 27b. La partie fixe 27a comporte un bout de tube 35 qui traverse le collecteur 5a et qui est soudé à la plaque 24.

L'extrémité avant de la partie fixe 27a aboutit à un orifice 33 percé dans la partie inférieure de la paroi 2. L'extrémité arrière est située à l'extérieur du collecteur 5a et porte une bride 28 ou tout autre moyen équivalent servant à la fixation de la partie mobile. La partie fixe comporte des orifices latéraux 29 qui communiquent avec le collecteur 5a et qui permettent d'alimenter en air préchauffé la partie mobile.

La partie mobile 27b comporte un manchon cylindrique 30 ouvert à ses deux extrémités qui s'engagent télescopiquement dans la partie fixe et qui pénètre dans le lit de matière. Ce manchon est soudé à des tiges 31 qui sont soudées sur une bride 32 qui se fixe sur la bride 28 par des boulons ou tout autre moyen équivalent.

On choisit la longueur des tiges 31 en fonction de la pénétration de la buse 30 dans le lit que l'on désire.

Bien entendu, les tiges 31 reliant la bride 32 au manchon 30 pourraient être remplacées par n'importe quel moyen de liaison équivalent laissant passer l'air par exemple par un manchon perforé.

L'air de combustion préchauffé sortant des serpentins 4 passe à travers les orifices 25 et 20 et traverse les buses 30 selon les flèches.

Lorsqu'un des manchons 30 est usé, il est facile de le remplacer et ce remplacement peut être effectué en marche.

On voit sur la figure 3 l'angle α' que forme l'axe x xl des buses avec la verticale et qui est compris entre 20° et 89°.

On a représenté sur la figure 2 un conduit 34 servant au passage d'un dispositif d'allumage automatique ou manuel du gazéificateur qui peut comporter un ou plusieurs de ces dispositifs.

**Revendications**

1. Gazéificateur de combustibles solides à lit fixe et à tirage inversé, du type comportant une enceinte cylindrique (2) de séchage et de pyrolyse, à axe vertical, qui est équipée à l'extrémité supérieure d'un sas de chargement (1) et dont l'extrémité inférieure est ouverte et communique avec une chambre de combustion (3) coaxiale dont la paroi cylindrique est composée d'une virole en tôle d'acier (4a) qui est tapissée intérieurement par un ou plusieurs serpentins (4) dont les extrémités inférieures sont connectées sur des arrivées d'air de combustion (5), caractérisé en ce que les extrémités supérieures desdits serpentins sont connectées sur un collecteur annulaire (5a) qui est disposé à la jonction entre ladite enceinte (2) et ladite chambre de combustion (3) et qui comporte des sorties d'air inclinées vers l'axe et vers le bas, en ce que l'extrémité inférieure de ladite chambre de combustion (3) comporte une plaque de fond fixe (21) et une sole circulaire tournante (7) qui porte sur sa face supérieure un noyau tournant axial (6) formant une cheminée verticale coaxiale à la chambre de combustion, et en ce que ladite cheminée est composée de deux tubes coaxiaux (6a, 6b) qui délimitent entre eux un espace annulaire (6c) dans lequel circule l'air de combustion.

2. Gazéificateur selon la revendication 1, caractérisé en ce que ladite sole tournante est entraînée en rotation par un motoréducteur (8, 8a) et porte sur sa face inférieure des ailettes de raidissement (7b) qui poussent les cendres tombant de la sole vers l'ouverture d'un sas à cendres (12) placé au-dessus d'un cendrier (13) et en ce que l'extrémité inférieure de ladite chambre de combustion comporte une ouverture périphérique (19) qui sépare l'extrémité inférieure de la chambre (3) de ladite sole (7) et qui sert à la sortie des gaz et à l'évacuation des cendres.

3. Gazéificateur selon les revendications 1 et 2, caractérisé en ce que ladite cheminée verticale axiale comporte une extrémité inférieure connectée sur une arrivée d'air de combustion et une extrémité supérieure équipée d'un déflecteur (6d) qui injecte l'air de combustion vers le bas.

4. Gazéificateur selon la revendication 1, caractérisé en ce que le tube intérieur (6a) comporte des barres en métal réfractaire (10) qui s'étendent à travers ledit espace annulaire (6c) où elles sont refroidies par l'air de combustion et qui traversent le tube externe (6b) pour pénétrer dans le lit en combustion, de telle sorte qu'elles améliorent la descente des matériaux.

5. Gazéificateur selon l'une quelconque des revendications 1 à 4, caractérisé en ce qu'il comporte une première enveloppe cylindrique (14) qui entoure coaxialement ladite chambre de combustion (3) en délimitant avec celle-ci un espace annulaire (14a) dont l'extrémité inférieure communique avec ladite ouverture périphérique (19) et dont l'extrémité supérieure communique avec un conduit (15) de sortie des gaz combustibles qui circulent dans ledit espace annulaire (14a), une deuxième enveloppe cylindrique externe (17) qui entoure coaxialement la première enveloppe (14) en délimitant avec celle-ci un espace annulaire (17a) qui est ouvert à la partie supérieure et qui comporte, dans la partie inférieure, un conduit (18) de sortie qui est connecté, d'une part, sur les arrivées d'air (15) dudit serpentin et, d'autre part, sur l'extrémité inférieure dudit arbre creux (9) et ledit espace annulaire (17a) fait partie d'un circuit de préchauffage de l'air de combustion qui est équipé éventuellement d'un ventilateur (22).

6. Gazéificateur selon l'une quelconque des revendications 1 à 5, caractérisé en ce que ledit collecteur annulaire (5a) a une section triangulaire délimitée par la paroi verticale de l'enceinte (2), une bride horizontale (23) qui obture l'extrémité supérieure de la chambre de combustion et une plaque inclinée 24) et ladite bride (23) comporte des orifices (25) qui mettent en communication ledit collecteur (5a) avec un volume annulaire (26) délimité par la spire supérieure du ou des serpentins (4), par ladite virole (4a), par la paroi de l'enceinte (2) et par ladite bride (23) et les extrémités supérieures du ou des serpentins (4) débouchent dans ledit volume (26).

7. Gazéificateur selon la revendication 6, caractérisé en ce que les sorties d'air sont constituées par des buses composées de deux parties, une partie fixe (27a) constituée par un bout de tube percé d'orifices (29) qui traverse ledit collecteur (5a), dont l'extrémité avant aboutit à un orifice (33) situé dans la partie inférieure de la paroi de l'enceinte (2) et dont l'extrémité arrière est située à l'extérieur du collecteur (5a) et porte un organe de fixation (28) et une partie mobile (27b) qui comporte un manchon cylindrique (30) ouvert à ses deux extrémités qui est relié par un moyen de liaison (31) perméable à l'air à un organe de fixation (32) qui coopère avec l'organe de fixation (28), de sorte que ledit manchon (30) est engagé télescopiquement dans le bout de tube (35) et que la longueur du moyen de liaison (31) détermine la longueur de pénétration des buses dans le lit de matière.

**Claims**

1. Gas generator for solid combustible materials with fixed bed and reverse draught of the type comprising a cylindrical drying and pyrolisis enclosure (2) of vertical axis, which is equipped at its upper end with a loading compartment (1), the lower end being opened and communicating with a co-axial combustion chamber (3), the cylindrical wall of which is composed of an iron shell-plate (4a) which is lined on the inside with one or more coils (4) of wich the lower ends are connected on combustion air-inlets (5) characterized in that the upper ends of said coils are connected to an annular collector (5) situated on the junction between the said enclosure (2) and the combustion chamber (3) and which comprises air outlets inclined downwardly and towards the axis, and in that the lower end of the combustion chamber (3) comprises a fixed bottom plate (21) and a rotary hearth plate (7) provided on its upper face with an axial rotary core (6) forming a vertical chimney which is coaxial to the combustion chamber, and in that the said chimney is composed of two coaxial tubes (6a, 6b) defining together an annular space (6c) inside which flows the combustion air.

2. Gas generator according to claim 1, characterized in that the said rotary hearth plate is driven in rotation by a motor-reducing device (8, 8a) and is provided on its lower face with small stiffening blades (7b) pushing the ashes falling from the hearth plate towards the opening of an ash grid (12) placed above an ash tray (13), and in that the lower end of the said combustion chamber is provided with a peripheral opening (19) separating the lower end of the chamber (3) from said hearth plate (7) and used as an outlet for the gases and for the removal of the ashes.

3. Gas generator according to claim 1 and 2, characterized in that the said vertical axial chimney is provided with a lower end which is connected to a combustion air-inlet and to an upper end equipped with a deflector (6d) which injects the combustion air downwardly.

4. Gas generator according to claim 1, characterized in that the lower tube (6a) comprises bars in refractory metal (10) which extend through the annular space (6c) where they are cooled by the combustion air and which traverse the outer tube (6b) to penetrate the combustion bed so as to improve the descent of the materials.

5. Gas generator according to any one of claims 1 to 4, characterized in that it comprises a first cylindrical casing (14) which surrounds coaxially the combustion chamber (3) defining therewith an annular space (14a) whose lower end communicates with said peripheral opening (19) and whose upper end communicates with an outlet pipe (15) for the combustible gases flowing in said annular space (14a), a second cylindrical outer casing (17) which surrounds coaxially the first casing (14) by defining therewith an annular space (17a) which is opened at the top and which is provided at the base with an outlet pipe (18) connected, on the one hand, with the air inlets (15) of the said coil, and on the other hand, with the lower end of the said hollow shaft (9) and the said annular space (17a) forms part of a circuit for pre-heating the combustion air, which circuit can be equipped with a blower (22) if necessary.

6. Gas generator according to any one of claims 1 to 5, characterized in that the said annular collector (5a) is of triangular cross-section defined by the vertical wall of the enclosure (2), a horizontal flange (23) shutting off the upper end of the combustion chamber and by an inclined plate (24), and the said flange (23) is provided with orifices (25) which create a connection between said collector (5a) and an annular volume (26) defined by the top whorl of the coil or coils (4), by said shell plate (4a), by the wall of the enclosure (2) and by said flange (23), the upper ends of the coil or coils (4) issuing into the volume (26).

7. Gas generator according to claim 6, characterized in that the said nozzles are composed of two parts, one fixed part (27a) constituted by a portion of pipe provided with orifices (29) and which traverses the said collector (5a) the front end of which issues into an orifice (33) situated in the lower part of the wall of the enclosure (2), the rear end being situated outside the collector (5a) and carrying a securing member (28, and a movable part (27b) which comprises a cylindrical sleeve (30) opened at both ends which is joined by an air-permeable connection means (31) to a securing member (32) cooperating with the securing member (28), so that said sleeve (30) is telescopically engaged in the pipe portion (35) and the length of the joining means (31) determines the length of penetration of the nozzles into to the bed of material.

**Ansprüche**

1. Vergaser für feste Brennstoffe mit Festbett und Umkehrzug, umfassend ein zylindrisches Gehäuse (2) zur Trocknung und Pyrolyse mit vertilkaler Achse, welches am oberen Ende mit einer Chargierschleuse (1) versehen ist und dessen unteres Ende offen ist und mit einer koaxialen Verbrennungskammer (3) in Verbindung steht, deren zylindrische Wand durch einen Mantel aus Stahlblech (4a) gebildet ist, der innen mit einer oder mehreren Rohrschlangen (4) ausgekleidet ist, deren untere Enden an Verbrennungsluftzuführungen (5) angeschlossen sind, dadurch gekennzeichnet, daß die oberen Enden der Rohrschlangen an einen Ringkollektor (5a) angeschlossen sind, der am Übergang zwischen dem Gehäuse (2) und der Vrebrennungskammer (3) angeordnet ist und zur Achse und nach unten geneigte Luftausgänge umfaßt, daß das untere Ende der Verbrennungskammer (3) eine Platte mit einem ortsfesten Boden (21) und eine kreisförmige Drehsohle (7) aufweist, die an ihrer Oberseite einen axialen Drehkörper (6) trägt, welcher einen zur Verbrennungskammer koaxialen, vertikalen Kamin bildet, und daß der Kamin durch zwei koaxiale Rohre (6a, 6b) gebildet ist, die zwischen sich einen Ringraum (6c), abgrenzen, in welchem die Verbrennungsluft zirkuliert.

2. Vergaser nach Anspruch 1, dadurch gekennzeichnet, daß die Drehsohle durch einen Getriebemotor (8, 8a) in Rotation versetzt ist und auf ihrer Unterseite Versteifungsflügel (7b) trägt, die die von der Sohle in Richtung zur Öffnung einer über einem Aschenbehälter (13) angeordneten Aschenschleuse (12) fallende Asche vorwärtstreiben, und daß das untere Ende der Verbrennungskammer eine periphere Öffnung (19) aufweist, die zwischen dem unteren Ende der Kammer (3) und der Sohle (7) angeordnet ist und zum Austreten von Gasen und Entleeren der Asche dient.

3. Vergaser nach den Ansprüchen 1 und 2, dadurch gekennzeichnet, daß der axiale, vertikale Kamin ein unteres Ende, das an eine Verbrennungsluftzuführung angeschlossen ist, und ein oberes Ende, das mit einem die Verbrennungsluft nach unten treibenden Deflektor (6d) versehen ist, besitzt.

4. Vergaser nach Anspruch 1, dadurch gekennzeichnet, daß das innere Rohr (6a) Stäbe (10) aus feuerfestem Material umfaßt, die sich quer durch den Ringraum (6c) erstrecken, wo sie durch die Verbrennungsluft abgekühlt werden, und das äußere Rohr (6b) durchqueren und zwecks Förderung der Abwärtsbewegung der Materialien in das Verbrennungsbett ragen.

5. Vergaser nach einem der Ansprüche 1 bis 4, dadurch gekennzeichnet, daß er eine erste zylindrische Hülle (14) umfaßt, die die Verbrennungskammer (3) unter Begrenzung eines Ringraumes (14a) mit derselben koaxial umgibt, wobei das untere Ende des Ringraumes (14a) mit der peripheren Öffnung (19) in verbindung steht und das obere Ende mit einer Austrittsleitung (15) für die im Ringraum (14a) zirkulierenden Verbrennungsgase in Verbindung steht, und eine zweite äußere zylindrische Hülle (17) umfaßt, die die erste Hülle (14) unter Begrenzung eines Ringraumes (17a) mit derselben koaxial umgibt, welcher Ringraum (17a) im oberen Teil offen ist und im unteren Teil eine Ausgangsleitung (18) aufweist, die einerseits mit den Luftzuführungen (5) der Rohrschlange und anderseits mit dem unteren Ende einer hohlen Welle (9) verbunden ist, und der Ringraum (17a) Teil eines Kreislaufs zum Vorwärmen der Verbrennungsluft ist, der gegebenenfalls mit einem Ventilator (22) versehen ist.

6. Vergaser nach einem der Ansprüche 1 bis 5, dadurch gekennzeichnet, daß der Ringkollektor (5a) einen durch die vertikale Wand des Gehäuses (2), einen das obere Ende der Verbrennungskammer verschließenden horizontalen Flansch (23) und eine geneigte Platte (24) begrenzten Dreiecksabschnitt aufweist, und daß der Flansch (23) Öffnungen (25) besitzt, die den Kollektor (5a) mit einem Ringraum (26) verbinden, der druch die obere Windung der Rohrschlange(n) (4), durch den Mantel (4a), durch die Wand des Gehäuses (2) und durch den Flansch (23) begrenzt ist, und daß die oberen Enden der Rohrschlange(n) (4) in den Raum (26) münden.

7. Vergaser nach Anspruch 6, dadurch gekennzeichnet, daß die Düsen aus zwei Teilen bestehen, nämlich einem fixen, durch ein mit Öffnungen (29) versehenes Rohrende gebildeten Teil (27a), der durch den Kollektor (5a) ragt, dessen vorderes Ende an eine im unteren Teil der Wand des Gehäuses (2) befindliche Öffnung (33) stößt und dessen hinteres Ende sich außerhalb des Kollektors (5a) befindet und ein Befestigungsorgan (28) und einen beweglichen Teil (27b) trägt, der eine zylindrische, an beiden Enden offene Muffe (30) umfaßt, die über ein luftdurchlässiges Verbindungsmittel (31) mit einem Besfestigungsorgan (32) verbunden ist, welches mit dem Befestigungsorgan (28) derart zusammenwirkt, daß die Muffe (30) teleskopisch in das Rohrende (35) eingeschoben wird und die Länge des Verbindungsmittels (31) die Eindringtiefe der Düsen in das Materialbett festlegt.

Fig.1

Fig. 3

Fig. 2